# EUROPEAN PATENT SPECIFICATION

(11) **EP 1 399 903 B1**
(45) Date of publication and mention of the grant of the patent: **13.12.2006**
(21) Application number: 02720711.7
(22) Date of filing: 05.04.2002
(51) Int. Cl.: G08G 1/095

(54) **LIGHT SIGNAL DEVICE**
LICHTSIGNALVORRICHTUNG
DISPOSITIF DE SIGNALISATION LUMINEUSE& xA;

(30) Priority: 09.04.2001 SE 0101262
(43) Date of publication of application: 24.03.2004
(73) Proprietor: Eriksson, Jan, 147 63 Uttran (SE)
(72) Inventor: Eriksson, Jan, 147 63 Uttran (SE)
(74) Representative: Fritzon, Rolf
(86) International application number: PCT/SE2002/000683
(87) International publication number: WO 2002/082403

(56) References cited:
- US-A- 3 885 197

## Description

The present invention relates to a device for automatic adaptation of the signal light in a traffic light signal device or a group of similar devices and alternatively in emergency vehicles in relation to the light conditions and with reference to the intensity and angle of the light.

When you e.g. are driving in traffic in strong sunlight it is often difficult to see how a traffic light is set, e.g. the light is red or green. This is especially difficult when the sunlight shines straight into the traffic signal or at very strong direct light. It is in this situation desirable with a signal, which is easy to see, e.g. a very intense signal or a signal that has pulsating light. A traffic signal, which is e.g. easy to see in strong ambient light, can in weaker light conditions be too intense and dazzle the driver. This is especially clear during the dark hours of the day or during rain. The signals that are easy to see can often be seen as irritating, e.g. the light can be unnecessarily intense and dazzle the driver.

As know technology in this area can be mentioned what is illustrated in the US patent 4,408,180 and which document describes the use of a circuit for adjusting the intensity of the light in a traffic signal to reduce energy consumption. This device does not, however, take into consideration from which direction the ambient light is coming nor its angle in relation to the signal device and consequently does not consider the lights influence on the signals visibility. One object with the present invention is to solve this problem.

The purpose with the present invention is to bring about a device of the above mentioned type by which one obtains a possibility to automatically adapt the signal light.

Thanks to the invention one has now created a light signal device, which in an excellent way fulfills its purpose, which at the same time is cheap and simple to manufacture. With this device the signal lights groups in e.g. a traffic light device, even when they are aimed in different directions, can automatically be adjusted individually or jointly by both diffuse ambient light and direct ambient light.

The invention is described further below with the help of a prefered example with reference to the drawings enclosed, in which
- Fig. 1.: shows a traffic light signal device in accordance with the invention,
- Fig. 2.: shows a top view of the device illustrated in fig. 1,
- Fig. 3.: shows an example of a light detector device, which is provided in the device in accordance with the invention and how it is located to receive direct light, when this direct light is coming from different light angles.
- Fig. 4.: shows an explanatory sketch, which is an example of the light signal device in question, when it has been applied to a traffic light signal device in a street intersection,
- Fig. 5.: shows an alternative embodiment example in the shape of a tube created light detector device,
- Fig. 6: shows a trafficlight signal device on which the light detector device in accordance with fig. 5 is mounted for light detection when the signal device is only aimed in one direction.
- Fig. 7: shows an alternative embodiment example of the light detector device in the shape of a prism or a lens.
- Fig. 8: shows the light detector device in accordance with fig. 7 with a single light inlet, and
- Fig. 9: shows a traffic light signal device, on which a light detector device in accordance with fig. 7 or 8 is mounted in an elevated position to prevent it from being covered with snow.

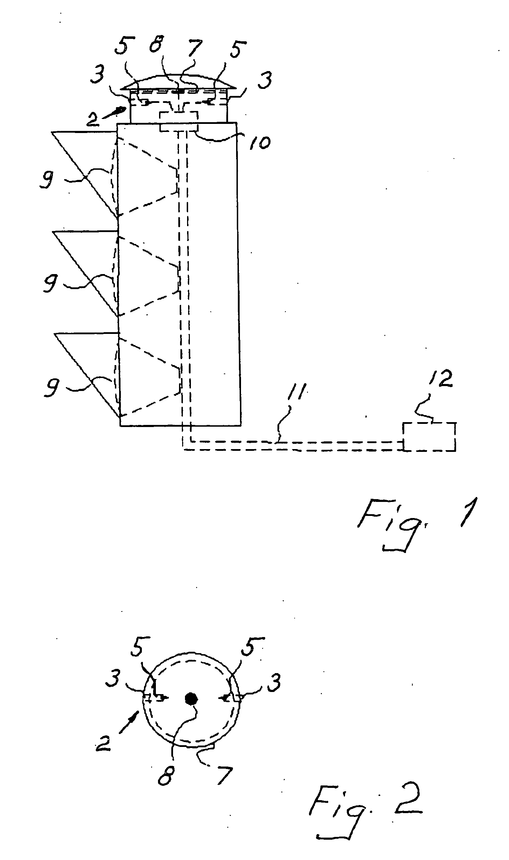

As can be understod from the drawings and further from fig. 1, this illustrates an example of a traffic light signal device 1 in accordance with the invention. This is set up to detect diffuse and direct ambient light and has for this reason been equipped with several different light sensitive devices, e.g. in the form of electric opto-sensors 8, which adjust the light intensity of the light signal devices 1 in relation to ambient light conditions. To achieve an even distribution of the ambient light its light inlets 7 have been provided with one or several light refraction devices, e.g. in the form of diffusers. The light inlet or light inlets 7 can be provided with one or several filters to filter desired or undesired light.

To sense direct ambient light the device 1 in the illustrated example has two light detector devices 2, both with their own light inlet 3. The light inlets 3, which are directed in different directions, can be provided with one or several filters to filter away desired or undesired light.

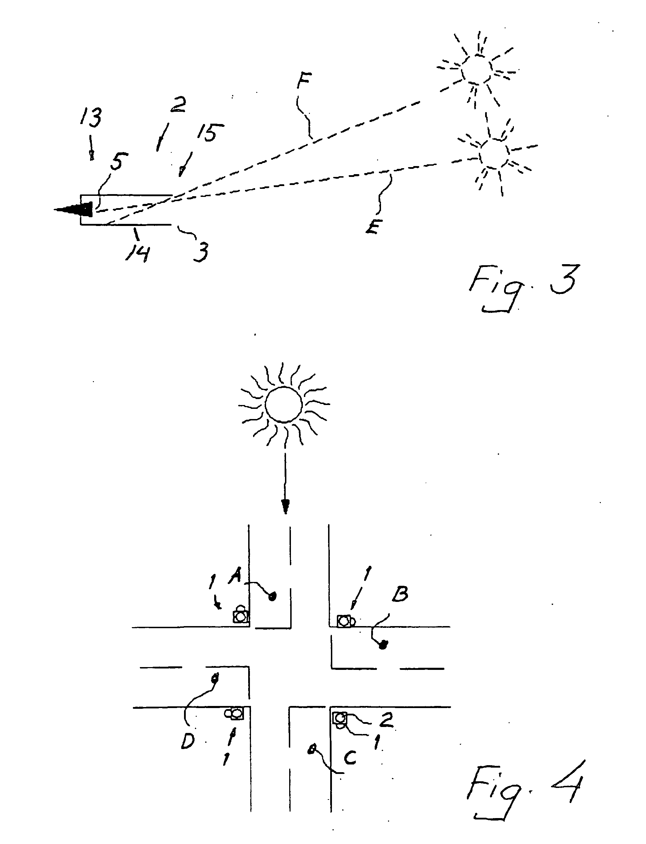

With reference to what is illustrated in fig. 1-3 it can be understood how the present embodiment example of a light detector device 2 is designed. The direct ambient light is lead through the light detector device 2 via its light inlet 3 to a light detector means in the form of e.g. an electronic opto-sensor 5, this so that the angle of the ambient light in reference to the signal device, e.g. high F or low E sitting sun, shall illuminate the opto-sensor 5 differently. This is accomplished by placing the opto-sensor 5 in the rear end 13 of the detector device 2 inside a tube 14 having an open end 15. This open end 15 is consequently directed outwards to the descending direct light. In fig. 5 the light detector device 4 is designed as a tube 14 having two open ends 19, 20 for direct light, at which a 360° responsive light-sensor 6 in the form of an opto-sensor can be centrally arranged. The light-sensor 6 can also be arranged to receive diffuse light A. Direct ambient light from left and right is on the drawing indicated with C and D. In fig. 6 it is closer illustrated how the last-mentioned light-sensor 6 can be mounted on a signal device, which is directed in at least one direction.

In fig. 7 is illustrated how an alternative design of light detector device 2' looks like, when it is designed as a prisma 14'. The prisma 14' has at least three sides 16-18, of which two create light-inlet openings 16,17 and as well as light-refraction walls 16', 17', and the third wall 18 forms an attachment surface or light-descending surface for a light sensor 6' in the form of an opto-sensor. In the figure the function is illustrated with low A and higher B sitting morning sun and to high sitting evening sun C and low sitting evening sun D. Outside given angles this light detector device can also be designed so that it reacts on ambient light but to a lesser extent than within given angles.

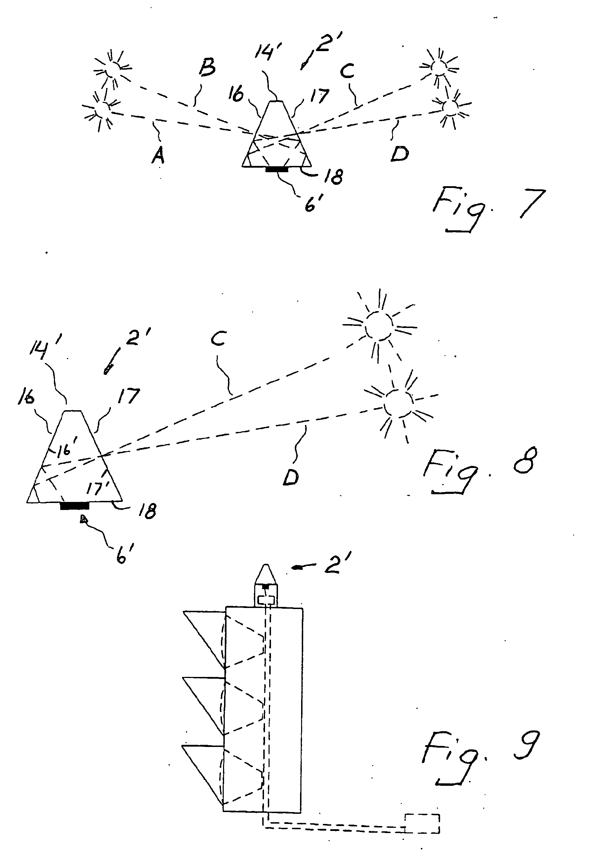

Fig. 8 illustrates the light detector device 2' illustrated in fig. 7, when the same is used for a single light-inlet and fig. 9 an embodiment example is illustrated, when the light detector device 2' is mounted in an elevated position on a traffic signal.

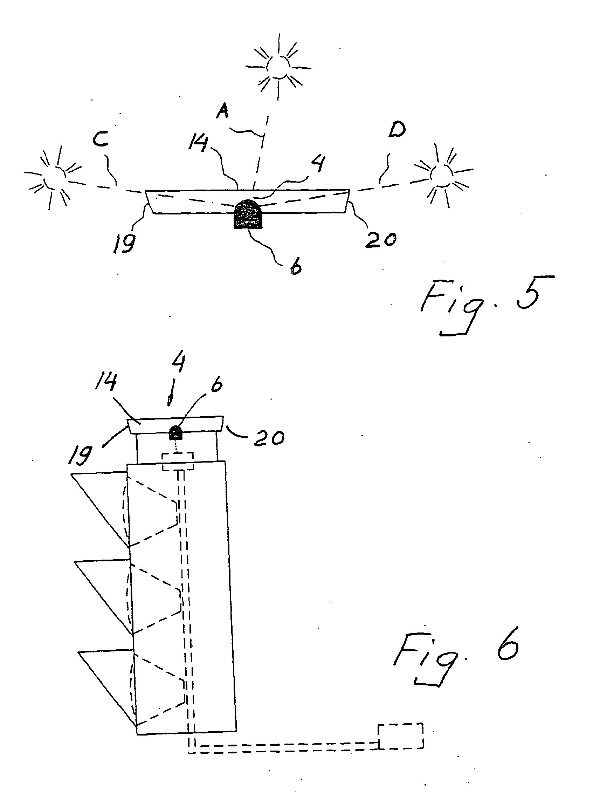

Reference shall now be made to fig. 4, from which can be understood how the light detector device according to the present invention can function. In this case four signal devices 1 are used, which have been provided with light detector devices 2, 2', 4 in accordance with the invention. With the assistance of these the signal devices 1, which are facing different bearings and the signal lights 9 of which will be unequally intensely lit by the direct ambient light, will light with different intensity. When the sun is shining straight onto the signal a viewer A will see a more intense signal and so also the viewer C, which is dazzled by the sunlight. When the signal is not intensely direct lit, the signal facing viewer B and D can have lower light intensity.

The light sensitive devices 8,5,6,6' sends signals to a processing unit 10, which automatically can adapt the signal light to the signal lamps 9 according to preset, tailored values. If several signal devices are used the signal from the light sensitive devices 5, 6, 6' and 8 can be sent via a connecting link e.g. a cable 11 to a synchronizing unit 12, which in a suitable fashion synchronize the light intensity in the different signal devices

The sensors 5,6,6' of the light detector device 2,2',4 can include a translucent protective lens, which extent of dirtiness is decided by transilluminating of a light with known intensity, at which measured values decide the extent of dirtiness to obtain a compensatory value.

## Claims

1. A device for automatic adaptation of the intensity of a signal light in one or a group of traffic signal light devices or in emergency vehicles dependent on the intensity and angle of direct light, **characterized in that** it comprises at least one light detector device (2, 2', 4) having at least one light inlet (3; 19, 20; 16, 17) for receiving direct ambient light incident from different directions and which includes at least one light sensitive sensor (5, 6, 6') arranged so that direct ambient light incident from different directions are sensed differently, wherein the intensity of said signal light is controlled in response to the direct ambient light as sensed by said at least one light sensitive sensor.

2. The device of claim 1 wherein the light detector device comprises a tube (14), at a first end of which said light inlet is provided.

3. The device of claim 2 wherein the light sensitive sensor is provided at a second end of said tube, said second end being opposite to said first end.

4. The device of claim 1 wherein the light detector device comprises a prism (14').

5. The device of claim 4 wherein said prism (14') has at least three sides (16-18), said at least one light inlet is provided at a first (17) side of the prism, a second (16) side of the prism forms a light reflecting wall, and a third side of the prism forms an attachment surface for the light sensitive sensor (6'), which is an electronic opto-sensor.

6. The device of claim 4 wherein said prism (14') has at least three sides (16-18), said at least one light inlet is two in number and are provided at a first (16) and at a second (17) one of the prism, said first (16) and second (17) sides of the prism form light reflecting walls, and a third side of said at least three sides of the prism forms an attachment surface for the light sensitive sensor (6'), which is an electronic opto-sensor.

7. The device of any of claims 1-6 wherein the light inlet (7) is provided with a filter for filtering light.

8. The device of any of claims 1-7 comprising a processing unit (10) for adapting the intensity of the signal light according to predetermined values.

9. The device of any of claims 1-8 wherein said light sensitive sensor is provided with a translucent protective lens, the dirtiness of which being determined by transilluminating the translucent protective lens with light of known intensity, wherein the light sensed by said light sensitive sensor determines the extent of dirtiness for obtaining a compensatory value.

10. The device of any of claims 1-9 comprising one or several light sensitive devices (8) for detecting diffuse ambient light and at least one light inlet (7) to said one or several light sensitive devices (8), wherein said inlet (7) is provided with one or several light diffusers to achieve an even distribution of light incident through said inlet and the intensity of said signal light is controlled in response to the evenly distributed incident light as sensed by said one or several light sensitive devices (8).

11. A method for controlling the intensity of the signal light in one or a group of traffic signal light devices or in emergency vehicles by means of a device according to any of claims 1 to 10 comprising the step of making the intensity of said signal light higher when the sun shines straight onto the signal light than when the sun does not shine straight onto said signal light.

## Patentansprüche

1. Vorrichtung zur automatischen Adaption der Intensität eines Signallichtes in einer Verkehrsampelvorrichtung oder in einer Gruppe von Verkehrsampelvorrichtungen oder in Notfallfahrzeugen in Abhängigkeit der Intensität und des Winkels von direktem Licht, **dadurch gekennzeichnet, dass** die Vorrichtung zumindest eine Lichtdetektorvorrichtung (2, 2', 4) mit zumindest einem Lichteinlass (3; 19, 20; 16, 17) zum Empfangen von direktem Umgebungslicht aufweist, das aus verschiedenen Richtungen einfällt, und die Vorrichtung zumindest einen lichtsensitiven Sensor (5, 6, 6') aufweist, der derart eingerichtet ist, dass direktes Umgebungslicht, das aus verschiedenen Richtungen einfällt, unterschiedlich erfasst wird, wobei die Intensität des Signallichtes in Antwort auf das direkte Umgebungslicht gesteuert wird, wie es durch den zumindest einen lichtsensitiven Sensor erfasst wird.

2. Vorrichtung nach Anspruch 1, bei der die Lichtdetektorvorrichtung ein Rohr (14) aufweist, an dessen erstem Ende der Lichteinlass vorgesehen ist.

3. Vorrichtung nach Anspruch 2, bei der der lichtsensitive Sensor an einem zweiten Ende des Rohres vorgesehen ist und das zweite Ende dem ersten Ende gegenüberliegt.

4. Vorrichtung nach Anspruch 1, bei der die Lichterdetektorvorrichtung ein Prisma (14') aufweist.

5. Vorrichtung nach Anspruch 4, bei der das Prisma (14') zumindest drei Seiten (16 - 18) aufweist, der zumindest eine Lichteinlass an einer ersten (17) Seite des Prismas vorgesehen ist, eine zweite (16) Seite des Prismas eine Licht reflektierende Wand bildet und eine dritte Seite des Prismas eine Anbringungsfläche für den lichtsensitiven Sensor (6') bildet, der ein elektronischer Optiksensor ist.

6. Vorrichtung nach Anspruch 4, bei der das Prisma (14') zumindest drei Seiten (16 - 18) aufweist, der zumindest eine Lichteinlass zweimal vorgesehen ist und diese an einer ersten (16) und an einer zweiten (17) Seite des Prismas vorgesehen sind, die erste (16) und zweite (17) Seite des Prismas Licht reflektierende Wände bilden und eine dritte Seite der zumindest drei Seiten des Prismas eine Anbringungsfläche für den lichtsensitiven Sensor (6') bildet, der ein elektronischer Optiksensor ist.

7. Vorrichtung nach einem der Ansprüche 1 - 6, bei der der Lichteinlass (7) mit einem Filter zum Filtern von Licht vorgesehen ist.

8. Vorrichtung nach einem der Ansprüche 1 - 7, die eine Verarbeitungseinheit (10) zum Anpassen der Intensität des Signallichtes gemäß vorbestimmten Werten aufweist.

9. Vorrichtung nach einem der Ansprüche 1 - 8, bei der der lichtsensitive Sensor mit einer lichtdurchlässigen Schutzlinse vorgesehen ist, deren Verschmutzung durch Durchleuchten der lichtdurchlässigen Schutzlinse mit Licht bekannter Intensität bestimmt wird, wobei das von dem lichtsensitiven Sensor erfasste Licht den Grad der Verschmutzung zum Erhalten eines Kompensationswertes bestimmt.

10. Vorrichtung nach einem der Ansprüche 1 - 9, die eine oder mehrere lichtsensitive Vorrichtungen (8) zum Erfassen von diffusem Umgebungslicht und zumindest einen Lichteinlass (7) zu dem einen oder zu den mehreren lichtsensitiven Vorrichtungen (8) aufweist, wobei der Einlass (7) mit einem oder mehreren Lichtdiffusern versehen ist, um eine gleichmäßige Verteilung des Lichtes zu erzielen, das durch den Einlass einfällt, und die Intensität des Signallichtes in Antwort auf das gleichmäßig verteilte, einfallende Licht gesteuert wird, wie es durch die eine oder die mehreren lichtsensitiven Vorrichtungen (8) erfasst wird.

11. Verfahren zum Steuern der Intensität des Signallichtes in einer Verkehrsampelvorrichtung oder einer Gruppe von Verkehrsampelvorrichtungen oder in Notfallfahrzeugen mittels einer Vorrichtung gemäß einem der Ansprüche 1 - 10, das den Schritt des Erhöhens der Intensität des Signallichtes aufweist, wenn die Sonne direkt auf das Signallicht scheint, als wenn die Sonne nicht direkt auf das Signallicht scheint.

## Revendications

1. Dispositif pour l'adaptation automatique de l'intensité d'un feu de signalisation dans un ou dans un groupe de dispositifs de feux de signalisation ou dans des véhicules de secours, en fonction de l'intensité et de l'angle de la lumière directe, **caractérisé en ce qu'**il comprend au moins un dispositif détecteur de lumière (2, 2', 4) ayant au moins une entrée de lumière (3 ; 19, 20 ; 16, 17) pour recevoir la lumière ambiante directe incidente depuis différentes directions et qui comprend au moins un capteur photosensible (5, 6, 6') agencé de sorte que la lumière ambiante directe incidente depuis différentes directions soit détectée différemment, dans lequel l'intensité dudit feu de signalisation est commandée en réponse à la lumière ambiante directe telle qu'elle est détectée par ledit au moins un capteur photosensible.

2. Dispositif selon la revendication 1, dans lequel le dispositif détecteur de lumière comprend un tube (14) au niveau d'une première extrémité duquel est disposée ladite entrée de lumière.

3. Dispositif selon la revendication 2, dans lequel le capteur photosensible est disposé au niveau d'une seconde extrémité dudit tube, ladite seconde extrémité étant opposée à ladite première extrémité.

4. Dispositif selon la revendication 1, dans lequel le dispositif détecteur de lumière comprend un prisme (14').

5. Dispositif selon la revendication 4, dans lequel ledit prisme (14') a au moins trois côtés (16-18), ladite au moins une entrée de lumière est disposée au niveau d'un premier côté (17) du prisme, un second côté (16) du prisme forme une paroi réfléchissant la lumière et un troisième côté du prisme forme une surface de fixation pour le capteur photosensible (6'), lequel est un capteur opto-électronique.

6. Dispositif selon la revendication 4, dans lequel ledit prisme (14') a au moins trois faces (16-18), ladite au moins une entrée de lumière est au nombre de deux et celles-ci sont disposées au niveau d'un premier côté (16) et au niveau d'un second côté (17) du prisme, ledit premier (16) et ledit second (17) côté du prisme forment des parois réfléchissant la lumière et un troisième côté face desdites au moins trois côtés du prisme forme une surface de fixation pour le capteur photosensible (6'), lequel est un capteur opto-électronique.

7. Dispositif selon l'une quelconque des revendications 1 à 6, dans lequel l'entrée de lumière (7) est munie d'un filtre pour filtrer la lumière.

8. Dispositif selon l'une quelconque des revendications 1 à 7, comprenant une unité de traitement (10) pour adapter l'intensité du feu de signalisation conformément à des valeurs prédéterminées.

9. Dispositif selon l'une quelconque des revendications 1 à 8, dans lequel ledit capteur photosensible est muni d'une lentille de protection translucide, la saleté de celle-ci étant déterminée par un éclairage de la lentille de protection translucide par une lumière d'intensité connue, dans lequel la lumière détectée par ledit capteur photosensible détermine l'importance de la saleté pour obtenir une valeur compensatoire.

10. Dispositif selon l'une quelconque des revendications 1 à 9, comprenant un ou plusieurs dispositifs photosensibles (8) pour détecter une lumière ambiante diffuse et au moins une entrée de lumière (7) vers lesdits un ou plusieurs dispositifs photosensibles (8), dans lequel ladite entrée (7) est munie d'un ou de plusieurs diffuseurs de lumière pour obtenir une distribution uniforme de la lumière incidente à travers ladite entrée et l'intensité dudit feu de signalisation est commandée en réponse à la lumière incidente uniformément distribuée telle qu'elle est détectée par lesdits un ou plusieurs dispositifs photosensibles (8).

11. Procédé pour contrôler l'intensité du feu de signalisation dans un ou dans un groupe de dispositifs de feux de signalisation ou dans des véhicules de secours, au moyen d'un dispositif selon l'une quelconque des revendications 1 à 10, comprenant l'étape consistant à rendre l'intensité dudit feu de signalisation plus élevée lorsque le soleil rayonne directement sur le feu de signalisation que lorsque le soleil ne rayonne pas directement sur ledit feu de signalisation.
